# EUROPÄISCHE PATENTANMELDUNG

(11) **EP 4 843 739 A1**
(43) Veröffentlichungstag der Anmeldung: **25.11.2026**
(21) Anmeldenummer: 26171758.1
(22) Anmeldetag: 10.04.2026
(51) Int. Cl.: B29C 35/02, B29D 30/52, B29D 30/56, B29D 30/60

(54) **VERFAHREN UND ANLAGE ZUM HERSTELLEN EINES VORVULKANISIERTEN LAUFSTREIFENS FÜR DIE KALTRUNDERNEUERUNG EINES FAHRZEUGREIFENS**

(30) Priorität: 06.05.2025 DE 102025117186
(71) Anmelder: Continental Reifen Deutschland GmbH, 30175 Hannover (DE)
(72) Erfinder: Mailling, Antony, Devon, PL21 9LN (GB); Ohliger, Franziska, 30175 Hannover (DE); Frith, Shane, Devon, PL21 9LN (GB); Pritchard, Peter, Devon, PL21 9LN (GB)
(74) Vertreter: Continental Corporation

(57) **Zusammenfassung**

Die Erfindung betrifft ein Verfahren zum Herstellen eines vorvulkanisierten Laufstreifens für die Kaltrunderneuerung eines Fahrzeugreifens, mit mindestens den folgenden Schritten:
- Bereitstellen mindestens eines Materialstreifens (M);
- Zuführen des mindestens einen bereitgestellten Materialstreifens (M) auf eine Trommel (5) und Aufwickeln des Materialstreifens (M) auf eine Außen-Mantelfläche (5a) der Trommel (5) zum Ausbilden eines Laufstreifen-Rohlings (2R);
- Überführen der Trommel (5) in eine Heizpresse (4) mit Profil-Segmenten (9);
- Verstellen der Profil-Segmente (9) nach radial innen, so dass sich die Profil-Segmente (9) an den Laufstreifen-Rohling (2R) annähern;
- Aufheizen der Trommel (5) und/oder der Profil-Segmente (9), so dass der Laufstreifen-Rohling (2R) vulkanisiert wird und sich ein vorvulkanisierter Laufstreifen ausbildet; und
- Abnehmen des vorvulkanisierten Laufstreifens von der Trommel (5) nach Abschluss des Vulkanisierens.

## Beschreibung

Die Erfindung betrifft ein Verfahren und eine Anlage zum Herstellen eines vorvulkanisierten Laufstreifens für die Kaltrunderneuerung eines Fahrzeugreifens.

Derzeit gibt es insbesondere zwei Methoden für das Recycling von alten Fahrzeugreifen; zum einen eine Entsorgung, bei der die Bestandteile des alten Fahrzeugreifens durch spezielle Verfahren wiedergewonnen werden, und zum anderen die Runderneuerung des abgenutzten Fahrzeugreifens, bei der die Karkasse intakt bleibt und ein neuer Laufstreifen auf die intakte, aufgeraute Karkasse aufgebracht wird. Dabei gibt es zwei Methoden für eine solche Runderneuerung; eine Heißrunderneuerung und eine Kaltrunderneuerung.

Bei der Kaltrunderneuerung erfolgt die Verbindung zwischen dem neuen Laufstreifen und der alten Karkasse durch eine weitere Vulkanisation bei niedrigeren Temperaturen als bei der Heißrunderneuerung. Bei der Kaltrunderneuerung wird dabei in der Regel nur der Laufstreifen erneuert, während die Seitenwände des Fahrzeugreifens unverändert bleiben. Bei der Heißrunderneuerung hingegen wird der gesamte alte aufgeraute Fahrzeugreifen, d.h. der Laufstreifen und die Seitenwände, mit unvulkanisiertem Gummi ummantelt. Anschließend findet eine Vulkanisierung in einer Heizpresse statt, wodurch sowohl der Laufstreifen als auch die Seitenwände erneuert werden.

Herkömmliche und gängige Methoden zur Herstellung von Laufstreifen für die Kaltrunderneuerung sind sehr maschinen- und energieaufwändig. So wird bei den herkömmlichen Verfahren eine Gummimischung extrudiert, die nachfolgend stark abzukühlen ist. Außerdem werden Maschinen zum Formen und Texturieren des Laufstreifens benötigt, die ebenfalls energieintensiv betrieben werden. Zudem werden weitere Maschinen zum Bearbeiten der Oberfläche der Laufstreifenrückseite benötigt, um bei der Herstellung des runderneuerten Reifens eine geeignete Verbindung zur neuen Lauffläche zu ermöglichen. Daher sind eine Reihe von Maschinenkomponenten nötig, deren Betrieb sehr energieintensiv ist.

CN 101513759 A beschreibt ein Verfahren zum Herstellen eines vorvulkanisierten Laufstreifens, der bei einer Kaltrunderneuerung zur Anwendung kommen kann. Dazu wird ein alter Fahrzeugreifen mit einer entsprechend aufbereiteten Karkasse als Grundkörper verwendet. Auf diese Karkasse wird eine Trennschicht aufgebracht und ein unvulkanisierter Laufstreifen darauf aufgelegt. In einer Heißvulkanisationsform wird der Grundkörper mit dem aufgebrachten Laufstreifen erhitzt und dadurch der Laufstreifen vulkanisiert. Aufgrund der Trennschicht kann der nun vorvulkanisierte Laufstreifen leicht von der Karkasse getrennt werden und für eine Kaltrunderneuerung eines beliebigen Fahrzeugreifens verwendet werden. Der Grundkörper hingegen wird für die Herstellung weiterer vorvulkanisierter Laufstreifen, wie beschrieben, wiederverwendet.

Der Erfindung liegt die Aufgabe zu Grunde, ein Verfahren und eine Anlage anzugeben, mit denen ein vorvulkanisierter Laufstreifen für eine Kaltrunderneuerung eines Fahrzeugreifens mit geringem maschinellem Aufwand sowie energieeffizient hergestellt werden kann.

Diese Aufgabe wird durch ein Verfahren und eine Anlage gemäß den unabhängigen Ansprüchen gelöst. Die Unteransprüche geben bevorzugte Weiterbildungen an.

Erfindungsgemäß ist demnach ein Verfahren zum Herstellen eines vorvulkanisierten Laufstreifens für die Kaltrunderneuerung eines Fahrzeugreifens, mit mindestens den folgenden Schritten vorgesehen:
- Bereitstellen mindestens eines Materialstreifens aus mindestens einer Materialbahn aus einem Gummimaterial, insbesondere aus einer Kautschukmischung;
- Zuführen des mindestens einen bereitgestellten Materialstreifens auf eine Trommel aus Metall und Aufwickeln des zugeführten Materialstreifens auf eine Außen-Mantelfläche der Trommel, so dass sich ein rundumlaufender Laufstreifen-Rohling auf der Trommel ausbildet;
- Überführen der Trommel mit dem darauf befindlichen Laufstreifen-Rohling in eine Heizpresse mit radial verstellbaren Profil-Segmenten;
- Verstellen der Profil-Segmente der Heizpresse nach radial innen in Richtung der Trommel, so dass sich die Profil-Segmente an den darauf befindlichen Laufstreifen-Rohling von radial außen annähern, vorzugsweise bis profilierte radiale Innenseiten der Profil-Segmente den Laufstreifen-Rohling berühren;
- Aufheizen der Trommel und/oder der Profil-Segmente durch ein Heizmedium, so dass der Laufstreifen-Rohling aufgeheizt und dadurch vulkanisiert wird und sich ein vorvulkanisierter Laufstreifen ausbildet; und
- Abnehmen des somit fertiggestellten vorvulkanisierten Laufstreifens von der Trommel nach Abschluss des Vulkanisierens.

Vorteilhafterweise wird also ein Verfahren zum Herstellen des vorvulkanisierten Laufstreifens bereitgestellt, das in einer üblichen Heißvulkanisierungsanlage mithilfe einer modifizierten Heizpresse durchgeführt werden kann. Dazu wird eine entsprechend ausgeführte Metall-Trommel bereitgestellt, auf der der Laufstreifen-Rohling in der entsprechenden Abmessung und mit dem vordefinierten Material durch Aufwickeln ausgebildet werden kann. Die Metall-Trommel ist so ausgeführt, dass sie mit dem aufgewickelten Laufstreifen-Rohling in die modifizierte Heizpresse einer üblichen Heißvulkanisierungsanlage überführt werden kann.

Als solche weist die modifizierte Heizpresse kontrolliert aufheizbare Profil-Segmente auf, die über den Umfang verteilt sind und die radial verstellt werden können. Auf diese Weise kann die Trommel in einfacher Weise vorzugsweise koaxial zu den Profil-Segmenten in der Heizpresse positioniert und entsprechend sicher gehalten werden, so dass die Profil-Segmente anschließend gegen den Laufstreifen-Rohling gebracht werden können, um diesem durch Erhitzen ein Profil einzuprägen, wie es herkömmlicherweise bei einer Heißrunderneuerung mit einem zu heißrunderneuernden Fahrzeugreifen umgesetzt wird. Vorzugsweise wird auch die Trommel für diesen Heizprozess erhitzt.

Dies ermöglicht es einem Hersteller die Heißvulkanisierungsanlage durch nur geringe Anpassungen und damit mit nur geringen Kosten auch für das Herstellen eines vorvulkanisierten Laufstreifens für eine nachfolgende Kaltrunderneuerung zu verwenden. Die Trommel kann dabei wiederverwendet werden. Zudem kann der Energieaufwand für die Herstellung eines vorvulkanisierten Laufstreifens mit einer solchen Anlage signifikant verringert werden. Zudem sind weniger Herstellungsschritte und nötig und der Maschinenaufwand ist geringer, was den Herstellungsaufwand insgesamt verringert.

Vorzugsweise ist weiterhin vorgesehen, dass vor dem Aufwickeln des zugeführten Materialstreifens eine Trennschicht auf die Außen-Mantelfläche der Trommel aufgebracht wird und die Trennschicht nach dem Abnehmen des vorvulkanisierten Laufstreifens wieder entfernt wird. Dies vereinfacht das Abnehmen des vorvulkanisierten Laufstreifens von der Trommel nach der Vulkanisierung und schützt zudem die Außen-Mantelfläche der Trommel.

Vorzugsweise ist weiterhin vorgesehen, dass der vorvulkanisierte Laufstreifen in Form eines Rings von der Trommel abgenommen oder abgezogen wird oder der vorvulkanisierte Laufstreifen vor dem Abnehmen von der Trommel aufgetrennt wird, so dass ein vorvulkanisierter Laufstreifen in Form eines flachen Bandes von der Trommel abgenommen wird. Je nach Kundenwunsch kann der vorvulkanisierte Laufstreifen also in flexibler Weise bereitgestellt werden, um diesen dann in der Kaltrunderneuerung auf die entsprechend vorbereitete Karkasse des Fahrzeugreifens aufzubringen.

Vorzugsweise ist weiterhin vorgesehen, dass der mindestens eine Materialstreifen der Trommel über ein Rollensystem zugeführt wird. Auf diese Weise kann die Materialstruktur, die sich auf der Trommel ausbildet, gezielt beeinflusst werden, insbesondere um die gewünschten Eigenschaften des Laufstreifen-Rohlings bzw. des vorvulkanisierten Laufstreifens in Bezug auf Festigkeit, Flexibilität und Haltbarkeit einzustellen.

Vorzugsweise ist weiterhin vorgesehen, dass der Trommel ein extrudierter Materialstreifen zugeführt wird. Auf diese Weise ist eine einfache und flexible Materialwahl und Materialgeometrie möglich, wobei beispielsweise auch ein co-extrudierter Materialstreifen aus zwei unterschiedlichen Gummimaterialien möglich ist.

Vorzugsweise ist weiterhin vorgesehen, dass der Trommel nacheinander mehrere, vorzugsweise zwei, Materialstreifen zugeführt werden und die mehreren Materialstreifen nacheinander und damit radial übereinanderliegend auf die Außen-Mantelfläche der Trommel aufgewickelt werden, so dass ein Laufstreifen-Rohling mit mehreren radial übereinanderliegenden Materialstreifen ausgebildet wird, vorzugsweise mit Materialstreifen aus unterschiedlichen Gummimaterialien und/oder mit unterschiedlichen Festigkeiten. Auf diese Weise können beispielsweise auch zwei- oder mehrschichtige vorvulkanisierte Laufstreifen (Cap und Base) hergestellt werden.

Vorzugsweise ist weiterhin vorgesehen, dass der mindestens eine Materialstreifen zum Fertigstellen des Laufstreifen-Rohlings abgetrennt wird, sobald eine vorgegebene Anzahl an Lagen des Materialstreifens und/oder eine vordefinierte Geometrie des Laufstreifen-Rohlings und/oder ein vordefiniertes Gesamtgewicht an aufgewickelten Materialstreifen erreicht ist. Es ist also auf einfache Weise möglich, vorgegebene Parameter für den Laufstreifen-Rohling festzulegen und das Aufwickeln entsprechend zu steuern, um dann final in kontrollierter Weise einen entsprechend vorvulkanisierten Laufstreifen zu erhalten.

Vorzugsweise ist weiterhin vorgesehen, dass die Trommel mit dem darauf befindlichen Laufstreifen-Rohling nach dem Überführen in die Heizpresse koaxial zu den Profil-Segmenten positioniert und gehalten wird. Dies ermöglicht eine kontrollierte Annäherung der Profil-Segmente an den Laufstreifen-Rohling, wobei dafür in der Heizpresse eine entsprechende Halterung vorgesehen ist, die eine einfache Positionierung und ein sicheres Halten ermöglicht, insbesondere auch bei unterschiedlichen Einstellungen der Größen bzw. Durchmesser der Trommel.

Vorzugsweise ist weiterhin vorgesehen, dass beim Aufheizen der Trommel und/oder der Profil-Segmente durch das Heizmedium zum Vulkanisieren des Laufstreifen-Rohlings ein Druck von radial innen auf die Trommel ausgeübt wird, beispielsweise durch einen Balg, um die Trommel-Segmente der Trommel nach radial außen in Richtung der Profil-Segmente zu drücken. Dadurch wird ein sicherer Kontakt zwischen dem Laufstreifen-Rohling und den Profil-Segmenten und auch den Trommel-Segmenten sowie eine gewisse Spannung innerhalb des Laufstreifen-Rohlings vor und während der Vulkanisierung ermöglicht.

Vorzugsweise ist weiterhin vorgesehen, dass die Trommel Führungselemente aufweist, beispielsweise stirnseitige Flansche, die die Außen-Mantelfläche der Trommel in axialer Richtung zu beiden Seiten hin begrenzen, so dass die Position und die Bewegung des aufgewickelten Materialstreifens sowie des Laufstreifen-Rohlings in axialer Richtung begrenzt wird. Dadurch kann beim Überführen in die Heizpresse sowie auch bei den anderen Herstellungsschritten ein sicherer Sitz des Laufstreifen-Rohlings gewährleistet werden. Auch die axiale Ausdehnung des Laufstreifen-Rohlings während des Aufwickelns lässt sich dadurch kontrollieren bzw. begrenzen.

Die Erfindung betrifft auch eine Anlage zur Herstellung eines vorvulkanisierten Laufstreifens, insbesondere gemäß dem erfindungsgemäßen Verfahren, mit einer Wickelstation zum Herstellen eines Laufstreifen-Rohlings, und einer Heizpresse zum Ausbilden des vorvulkanisierten Laufstreifens aus dem hergestellten Laufstreifen-Rohling, wobei die Heizpresse radial verstellbare Profil-Segmente mit profilierten radialen Innenseiten aufweist, um den Laufstreifen-Rohling während der Vulkanisierung mit einer Profilierung bzw. dem Reifenprofil zu versehen;
wobei weiterhin eine Trommel aus Metall vorgesehen ist, die in der Wickelstation über eine entsprechende Aufnahme, beispielsweise eine Welle, drehbar gelagert werden kann, so dass der Trommel in der Wickelstation ein bereitgestellter Materialstreifen zugeführt und auf einer Außen-Mantelfläche der Trommel aufgewickelt werden kann, um den Laufstreifen-Rohling auszubilden,
wobei die Trommel mit dem darauf befindlichen Laufstreifen-Rohling aus der Wickelstation in die Heizpresse überführt und von einer Halterung an der Heizpresse derartig gehalten werden kann, beispielsweise durch eine zentrale Platte und/oder Schultern, dass die Profil-Segmente der Heizpresse durch eine radiale Verstellung der Profil-Segmente nach innen an den auf der Trommel befindlichen Laufstreifen-Rohling von radial außen angenähert werden können, und
wobei die Trommel und/oder die Profil-Segmente jeweils ein Heizmedium und/oder eine Einlassöffnung zum Zuführen eines Heizmediums aufweisen, wobei die Trommel und/oder die Profil-Segmente durch das Heizmedium aufgeheizt werden können, um den auf der Trommel befindlichen Laufstreifen-Rohling in der Heizpresse aufheizen und vulkanisieren zu können zum Ausbilden des vorvulkanisierten Laufstreifens.

Dadurch lässt sich das erfindungsgemäße Verfahren in einfacher Weise beispielsweise in einer üblichen Heißvulkanisierungsanlage mit einer entsprechend modifizierten Heizpresse umsetzen, indem eine entsprechend überführbare Metall-Trommel bereitgestellt wird, auf der sowohl der Laufstreifen-Rohling aufgewickelt als auch die Vulkanisierung durchgeführt kann.

Vorzugsweise ist weiterhin vorgesehen, dass die Trommel aus radial verstellbaren Trommel-Segmenten zusammengesetzt ist, deren radiale Außenseiten die Außen-Mantelfläche der Trommel bilden. Auf diese Weise ist eine flexible Anpassung an unterschiedliche zu heißrunderneuernde Fahrzeugreifen möglich, da sich der Durchmesser verändern lässt. Auch ein Abnehmen des vorvulkanisierten Laufstreifens kann erleichtert werden, indem die Trommel-Segmente (falls noch möglich) weiter nach radial innen verstellt werden.

Weitere Merkmale, Vorteile und Einzelheiten der Erfindung werden nun anhand der Zeichnung, die schematisch Ausführungsbeispiele darstellt, näher beschrieben. Dabei zeigen
Fig. 1 eine schematische Ansicht einer Anlage für die Herstellung eines vorvulkanisierten Laufstreifens für eine Kaltrunderneuerung von Fahrzeugreifen;
Fig. 2 eine Detailansicht einer Trommel der Anlage gemäß Fig. 1;
Fig. 3 eine Detailansicht einer Heizpresse der Anlage gemäß Fig. 1; und
Fig. 4 ein Flussdiagramm für einen beispielhaften Verfahrensablauf für die Herstellung des vorvulkanisierten Laufstreifens in der Anlage gemäß Fig. 1

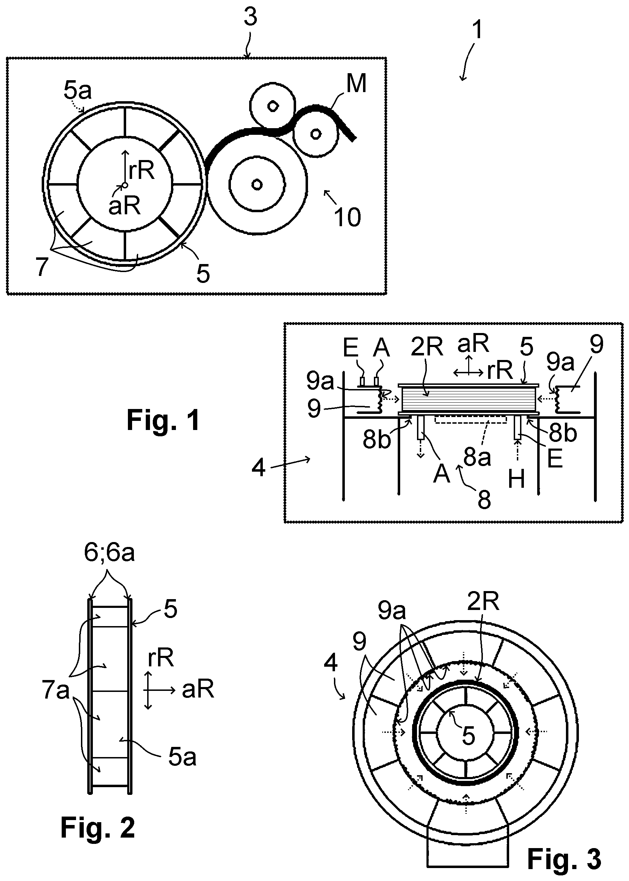

Figur 1 zeigt eine Anlage 1 für die Herstellung eines vorvulkanisierten Laufstreifens 2 für eine Kaltrunderneuerung von Fahrzeugreifen. Die Anlage 1 weist eine Wickelstation 3 zum Herstellen eines aufgewickelten Laufstreifen-Rohlings 2R und eine Heizpresse 4 zum Ausbilden des vorvulkanisierten Laufstreifens 2 aus dem bereitgestellten Laufstreifen-Rohling 2R auf. Um den Laufstreifen-Rohling 2R und den vorvulkanisierten Laufstreifen 2 innerhalb der Anlage 1 ausbilden, transportieren und behandeln zu können, wird als Grundkörper eine Trommel 5 aus Metall verwendet, die in Fig. 2 detailliert dargestellt ist.

Demnach weist die Trommel 5 Führungselemente 6 auf, beispielsweise stirnseitige Flansche 6a, die eine Außen-Mantelfläche 5a der Trommel 5 in axialer Richtung aR zu beiden Seiten hin begrenzen, was quasi zu einer Konturierung der Trommel 5 führt. Durch diese Konturierung wird das auf der Außen-Mantelfläche 5a der Trommel 5 befindliche Gummimaterial in einer gleichmäßigen und kontrollierten Weise so gehalten, dass es in den einzelnen noch beschriebenen Schritten nicht axial von der Trommel 5 rutscht. Die Flansche 6a wirken also als mechanische Randbegrenzungen, die das jeweilige Gummimaterial sicher auf der Trommel 5 halten.

Gleichzeitig sorgen die Flansche 6a bzw. die Führungselemente 6 dafür, dass das Gummimaterial während des Herstellungsprozesses eine bestimmte axiale Ausdehnung nicht überschreitet, wobei diese axiale Ausdehnung auf den gebrauchten Fahrzeugreifen abgestimmt ist, auf den der vorvulkanisierte Laufstreifen 2 anschließend aufgebracht werden soll. Um vorvulkanisierte Laufstreifen 2 für unterschiedliche Fahrzeugreifen mit derselben Trommel 5 herstellen zu können, können die Führungselemente 6 auch axial verstellbar ausgeführt sein. Ansonsten können auch unterschiedliche Trommeln 5 für unterschiedlich breite Fahrzeugreifen verwendet werden.

Weiterhin ist die Trommel 5 in mehrere Trommel-Segmente 7 unterteilt, gemäß der beispielhaften Ausführungsform in Fig. 1 in acht solche Trommel-Segmente 7, die sich jeweils über einen bestimmten Winkelbereich erstrecken. Die konvex geformten radialen Außenseiten 7a der einzelnen Trommel-Segmente 7 bilden die Außen-Mantelfläche 5a der Trommel 5. Die einzelnen Trommel-Segmente 7 sind in radialer Richtung rR verschieblich, so dass ein Radius der Außen-Mantelfläche 5a der Trommel 5 eingestellt werden kann. Dadurch lassen sich Laufstreifen-Rohlinge 2R bzw. vorvulkanisierte Laufstreifen 2 in unterschiedlichen Umfangslängen herstellen, je nach Fahrzeugreifen, auf dem dieser anschließend aufgebracht werden soll.

Die Heizpresse 4 weist eine geeignete Halterung 8 für die oben beschriebene Trommel 5 auf, so dass die Trommel 5 koaxial in der Heizpresse 4 bzw. koaxial zu Profil-Segmenten 9 der Heizpresse 4 positioniert und gehalten werden kann, wie in Fig. 3 dargestellt. Die Halterung 8 kann wie dargestellt die Form einer zentralen Platte 8a aufweisen, auf der die Trommel 5 zumindest bereichsweise aufliegt. Alternativ oder ergänzend kann vorgesehen sein, dass die Halterung 8 durch Schultern 8b an der Heizpresse 4 gebildet wird, auf denen die Trommel 5 aufliegt, beispielsweise im Bereich der Flansche 6a. Es sind aber je nach Ausführung der Heizpresse 4 und der Trommel 5 auch andere Ausführungen der Haltung 8 möglich.

Die Heizpresse 4 weist mehrere Profil-Segmente 9 auf, gemäß Fig. 3 acht solche Profil-Segmente 9, die sich jeweils über einen bestimmten Winkelbereich der Heizpresse 4 erstrecken und die jeweils eine konkav geformte radiale Innenseite 9a mit dem gewünschten Negativ des Laufstreifenprofils aufweisen. Die einzelnen Profil-Segmente 9 sind in radialer Richtung rR verschieblich, so dass die radialen Innenseiten 9a der Profil-Segmente 9 an die konvexe Außen-Mantelfläche 5a der in der Heizpresse 4 positionierten Trommel 5 angenähert werden können. Die konvexe Krümmung der Außen-Mantelfläche 5a der Trommel ist dazu an die konkave Krümmung der radialen Innenseiten 9a angepasst.

Sowohl die Trommel-Segmente 7 als auch die Profil-Segmente 9 sind beheizbar. Dazu weisen sie beispielsweise jeweils eine Einlassöffnung E zum Aufnehmen eines Heizmediums H und eine Auslassöffnung A zum Auslassen des Heizmediums H auf, so dass das Heizmedium H durch die jeweiligen Segmente 7, 9 geleitet werden kann, um diese gezielt zu erhitzen.

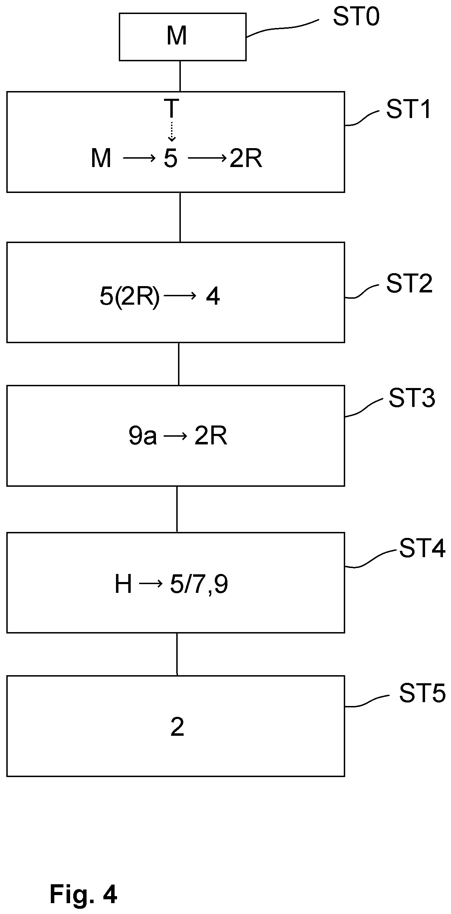

Das Verfahren zum Herstellen des vorvulkanisierten Laufstreifens 2 erfolgt mit einer solchen Anlage 1 gemäß Fig. 4 beispielsweise wie folgt:
Zunächst wird in einem anfänglichen Schritt ST0 mindestens ein Materialstreifen M aus einem Gummimaterial (Kautschukmischung) bereitgestellt, wobei der jeweilige Materialstreifen M aus einem vorgegebenen Gummimaterial oder aus mehreren unterschiedlichen Gummimaterialien beispielsweise unterschiedlicher Festigkeiten gefertigt ist. Der Materialstreifen M kann dazu beispielsweise ein extrudierter oder ein co-extrudierter Materialstreifen M sein.

In einem ersten Schritt ST1 wird der mindestens eine bereitgestellte Materialstreifen M in der Wickelstation 3 über ein Rollensystem 10 aus vorzugsweise mehreren Umlenkrollen der in der Wickelstation 3 drehbar aufgenommenen Trommel 5 zugeführt. Die Trommel 5 wird dabei in Rotation versetzt, so dass sich der mindestens eine zugeführte Materialstreifen M in einem Bandwickelverfahren (strip-winding-process) auf die Außen-Mantelfläche 5a der Trommel 5 aufwickelt. Der jeweilige Materialstreifen M wird während des Aufwickelns durch das Rollensystem 10 mit einer bestimmten Spannung und Orientierung zugeführt, so dass sich auf der Trommel 5 eine bestimmte Materialstruktur ausbildet, die die gewünschten Eigenschaften in Bezug auf Festigkeit, Flexibilität und Haltbarkeit aufweist.

Ist die gewünschte Anzahl an Lagen oder Wickelungen bzw. eine vordefinierte Geometrie sowie ein vordefiniertes Gesamtgewicht an aufgewickeltem Gummimaterial erreicht, wird der Materialstreifen M durchtrennt und der Laufstreifen-Rohling 2R ist fertiggestellt. Der mindestens eine Materialstreifen M wird dabei während der Rotation der Trommel 5 durch die Führungselemente 6 in seiner axialen Position und axialen Bewegungsfähigkeit eingeschränkt und dadurch auf der Trommel 5 gehalten. Gleichzeitig wird dadurch die axiale Ausdehnung des Laufstreifen-Rohlings 2R festgelegt, wobei diese axiale Ausdehnung auf den jeweils vorgesehenen Fahrzeugreifen abgestimmt ist.

Um am Ende des Herstellungsprozesses einen vorvulkanisierten Laufstreifen 2 zu erhalten, der aus Schichten mit verschiedenen Gummimaterialien und/oder mit verschiedenen Festigkeiten besteht, beispielsweise mit einer Base-Schicht und einer Cap-Schicht, können zwei separat bereitgestellte Materialstreifen M aus unterschiedlichen Gummimaterialien und/oder mit unterschiedlichen Festigkeiten nacheinander auf der Trommel 5 aufgewickelt werden, so dass bei entsprechender Wickelung zwei radial übereinanderliegende Schichten innerhalb des fertigen Laufstreifen-Rohlings 2R entstehen. Alternativ kann eine beispielsweise coextrudierte Materialbahn M aus zwei verschiedenen Gummimaterialien und/oder Gummimaterialien unterschiedlicher Festigkeiten bereitgestellt und auf der Trommel 5 aufgewickelt werden, so dass auch dadurch bei entsprechender Wickelung zwei radial übereinanderliegende Schichten innerhalb des fertigen Laufstreifen-Rohlings 2R entstehen.

Optional kann vorgesehen sein, dass vor dem Aufwickeln des mindestens einen Materialstreifens M eine Trennschicht T aus einer Folie oder einem Gewebe auf die Mantelfläche 5a der Trommel 5 aufgespult wird.

In einem nachfolgenden zweiten Schritt ST2 wird die Trommel 5 mit dem fertiggestellten Laufstreifen-Rohling 2R aus der Wickelstation 3 entnommen und anschließend in die Heizpresse 4 gebracht. Über die entsprechend ausgeführte Halterung 8 wird die Trommel 5 in der Heizpresse 4 koaxial zu den Profil-Segmenten 9 positioniert und gehalten. Die Trommel 5 liegt dabei wie in Fig. 1 dargestellt horizontal, d.h. die Trommel 5 ist gegenüber ihrer Lage in der Wickelstation 3 um 90° verkippt.

In einem dritten Schritt ST3 werden anschließend die Profil-Segmente 9 nach radial innen in Richtung der Trommel 5 verfahren, bis diese mit ihren radialen Innenseiten 9a gegen den Laufstreifen-Rohling 2R auf der Trommel 5 gelangen, so dass im nachfolgenden Vulkanisierungsprozess das Laufstreifenprofil in den Laufstreifen-Rohling 2R eingebracht werden kann.

In einem vierten Schritt ST4 wird ein Heizmedium H über die jeweiligen Einlassöffnungen E sowohl in die Trommel-Segmente 7 als auch in die Profil-Segmente 9 eingeleitet, so dass sich diese erwärmen und dadurch auch der Laufstreifen-Rohling 2R von radial außen und radial innen gleichmäßig erhitzt und dadurch vulkanisiert wird. Optional kann während der Vulkanisierung von radial innen ein Druck auf die Trommel-Segmente 7 ausgeübt werden, so dass diese nach radial außen gedrückt werden, beispielsweise über einen radial innenliegenden Balg oder über vergleichbare Mittel.

Nach Beendigung des Vulkanisierungsprozesses wird in einem fünften Schritt ST5 der somit fertiggestellte vorvulkanisierte Laufstreifen 2 von der Trommel 5 abgenommen oder abgezogen. Dies kann derartig erfolgen, dass der vorvulkanisierte Laufstreifen 2 seine Ringform beibehält. Alternativ kann der vorvulkanisierte Laufstreifen 2 auf der Trommel 5 aufgetrennt werden, so dass ein flacher bzw. bandförmiger Laufstreifen erhalten wird.

Das Abnehmen wird dabei durch die möglicherweise vorhandene Trennschicht T vereinfacht.

Der dadurch erhalten vorvulkanisierte Laufstreifen 2 kann anschließend final behandelt werden, beispielsweise durch Entfernen der Trennschicht T (falls vorhanden), durch Aufbringen eines Haftvermittlers (falls nötig) und durch Verpacken. Der vorvulkanisierte Laufstreifen 2 kann dann in einer üblichen Kaltrunderneuerung auf eine entsprechend vorbehandelte Karkasse aufgebracht und kaltvulkanisiert werden, um den zu erneuernden Fahrzeugreifen fertigzustellen.

### Bezugszeichenliste

- 1: Anlage
- 2: vorvulkanisierter Laufstreifen
- 2R: Laufstreifen-Rohling
- 3: Wickelstation
- 4: Heizpresse
- 5: Trommel
- 5a: Außen-Mantelfläche der Trommel 5
- 6: Führungselement
- 6a: Flansch
- 7: Trommel-Segment
- 7a: radiale Außenseite des Trommel-Segments 7
- 8: Halterung
- 8a: zentrale Platte
- 8b: Schulter
- 9: rofil-Segment
- 9a: radiale Innenseite des Profil-Segments 9
- 10: Rollen-System

- A: Auslassöffnung
- aR: axiale Richtung
- E: Einlassöffnung
- H: Heizmedium
- M: Materialstreifen
- rR: radiale Richtung
- T: Trennschicht

- ST0, ST1, ST2, ST3, ST4, ST5: Schritte des Verfahrens

## Patentansprüche

1. Verfahren zum Herstellen eines vorvulkanisierten Laufstreifens (2) für die Kaltrunderneuerung eines Fahrzeugreifens, mit mindestens den folgenden Schritten:
- Bereitstellen mindestens eines Materialstreifens (M) (ST0);
- Zuführen des mindestens einen bereitgestellten Materialstreifens (M) auf eine Trommel (5) aus Metall und Aufwickeln des zugeführten Materialstreifens (M) auf eine Außen-Mantelfläche (5a) der Trommel (5), so dass sich ein Laufstreifen-Rohling (2R) auf der Trommel (5) ausbildet (ST1);
- Überführen der Trommel (5) mit dem darauf befindlichen Laufstreifen-Rohling (2R) in eine Heizpresse (4) mit radial verstellbaren Profil-Segmenten (9) (ST2);
- Verstellen der Profil-Segmente (9) der Heizpresse (4) nach radial innen in Richtung der Trommel (5), so dass sich die Profil-Segmente (9) an den darauf befindlichen Laufstreifen-Rohling (2R) von radial außen annähern, vorzugsweise bis radiale Innenseiten (9a) der Profil-Segmente (9) den Laufstreifen-Rohling (2R) berühren (ST3);
- Aufheizen der Trommel (5) und/oder der Profil-Segmente (9) durch ein Heizmedium (H), so dass der Laufstreifen-Rohling (2R) vulkanisiert wird und sich ein vorvulkanisierter Laufstreifen (2) ausbildet (ST4); und
- Abnehmen des vorvulkanisierten Laufstreifens (2) von der Trommel (5) nach Abschluss des Vulkanisierens.

2. Verfahren nach Anspruch 1,
**dadurch gekennzeichnet, dass**
vor dem Aufwickeln des zugeführten Materialstreifens (M) eine Trennschicht (T) auf die Außen-Mantelfläche (5a) der Trommel (5) aufgebracht wird und die Trennschicht (T) nach dem Abnehmen des vorvulkanisierten Laufstreifens (2) wieder entfernt wird.

3. Verfahren nach Anspruch 1 oder 2,
**dadurch gekennzeichnet, dass**
der vorvulkanisierte Laufstreifen (2) in Form eines Rings von der Trommel (5) abgenommen oder abgezogen wird oder der vorvulkanisierte Laufstreifen (2) vor dem Abnehmen von der Trommel (5) aufgetrennt wird, so dass ein vorvulkanisierter Laufstreifen (2) in Form eines Bandes von der Trommel (5) abgenommen wird.

4. Verfahren nach einem der vorhergehenden Ansprüche,
**dadurch gekennzeichnet, dass**
der mindestens eine Materialstreifen (M) der Trommel (5) über ein Rollensystem zugeführt wird.

5. Verfahren nach einem der vorhergehenden Ansprüche,
**dadurch gekennzeichnet, dass**
der Trommel (5) ein extrudierter Materialstreifen (M) zugeführt wird.

6. Verfahren nach einem der vorhergehenden Ansprüche,
**dadurch gekennzeichnet, dass**
der Trommel (5) nacheinander mehrere, vorzugsweise zwei, Materialstreifen (M) zugeführt werden und die mehreren Materialstreifen (M) nacheinander und damit radial übereinanderliegend auf die Außen-Mantelfläche (5a) der Trommel (5) aufgewickelt werden, so dass ein Laufstreifen-Rohling (2R) mit mehreren radial übereinanderliegenden Materialstreifen (M) ausgebildet wird, vorzugsweise mit Materialstreifen (M) aus unterschiedlichen Gummimaterialien und/oder mit unterschiedlichen Festigkeiten.

7. Verfahren nach einem der vorhergehenden Ansprüche,
**dadurch gekennzeichnet, dass**
der mindestens eine Materialstreifen (M) zum Fertigstellen des Laufstreifen-Rohlings (2R) abgetrennt wird, sobald eine vorgegebene Anzahl an Lagen des Materialstreifens (M) und/oder eine vordefinierte Geometrie des Laufstreifen-Rohlings (2R) und/oder ein vordefiniertes Gesamtgewicht an aufgewickelten Materialstreifen (M) erreicht ist.

8. Verfahren nach einem der vorhergehenden Ansprüche,
**dadurch gekennzeichnet, dass**
die Trommel (5) mit dem darauf befindlichen Laufstreifen-Rohling (2R) nach dem Überführen in die Heizpresse (4) koaxial zu den Profil-Segmenten (9) positioniert und gehalten wird.

9. Verfahren nach einem der vorhergehenden Ansprüche,
**dadurch gekennzeichnet, dass**
beim Aufheizen der Trommel (5) und/oder der Profil-Segmente (9) durch das Heizmedium (H) zum Vulkanisieren des Laufstreifen-Rohlings (2R) ein Druck von radial innen auf die Trommel (5) ausgeübt wird, um Trommel-Segmente (7) der Trommel (5) nach radial außen in Richtung der Profil-Segmente (9) zu drücken.

10. Verfahren nach einem der vorhergehenden Ansprüche,
**dadurch gekennzeichnet, dass**
die Trommel (5) Führungselemente (6) aufweist, die die Außen-Mantelfläche (5a) der Trommel (5) in axialer Richtung (aR) zu beiden Seiten hin begrenzen, so dass die Position und die Bewegung des aufgewickelten Materialstreifens (M) sowie des Laufstreifen-Rohlings (2R) in axialer Richtung (aR) begrenzt wird.

11. Anlage (1) zur Herstellung eines vorvulkanisierten Laufstreifens (2), insbesondere gemäß einem Verfahren nach einem der vorhergehenden Ansprüche, mindestens aufweisend:
- eine Wickelstation (3) zum Herstellen eines Laufstreifen-Rohlings (2R), und
- eine Heizpresse (4) zum Ausbilden des vorvulkanisierten Laufstreifens (2) aus dem hergestellten Laufstreifen-Rohling (2R), wobei die Heizpresse (4) radial verstellbare Profil-Segmente (9) mit radialen Innenseiten (9a) aufweist;
wobei weiterhin eine Trommel (5) aus Metall vorgesehen ist, die in der Wickelstation (3) drehbar gelagert werden kann, so dass der Trommel (5) in der Wickelstation (3) ein bereitgestellter Materialstreifen (M) zugeführt und auf einer Außen-Mantelfläche (5a) der Trommel (5) aufgewickelt werden kann, um den Laufstreifen-Rohling (2R) auszubilden,
wobei die Trommel (5) mit dem darauf befindlichen Laufstreifen-Rohling (2R) aus der Wickelstation (3) in die Heizpresse (4) überführt und von einer Halterung (8) an der Heizpresse (4) derartig gehalten werden kann, beispielsweise durch eine zentrale Platte (8a) und/oder Schultern (8b), dass die Profil-Segmente (9) der Heizpresse (4) durch eine radiale Verstellung der Profil-Segmente (9) nach innen an den auf der Trommel (5) befindlichen Laufstreifen-Rohling (2R) von radial außen angenähert werden können, und
wobei die Trommel (5) und/oder die Profil-Segmente (9) jeweils ein Heizmedium (H) und/oder eine Einlassöffnung (E) zum Zuführen eines Heizmediums (H) aufweisen, wobei die Trommel (5) und/oder die Profil-Segmente (9) durch das Heizmedium (H) aufgeheizt werden können, um den Laufstreifen-Rohling (2R) in der Heizpresse (4) aufheizen und vulkanisieren zu können zum Ausbilden des vorvulkanisierten Laufstreifens (2).

12. Anlage (1) nach Anspruch 11
**dadurch gekennzeichnet, dass**
die Trommel (5) aus radial verstellbaren Trommel-Segmenten (7) zusammengesetzt ist, deren radiale Außenseiten (7a) die Außen-Mantelfläche (5a) der Trommel (5) bilden.

13. Anlage (1) nach Anspruch 11 oder 12,
**dadurch gekennzeichnet, dass**
die Trommel (5) Führungselemente (6) aufweist, beispielsweise stirnseitige Flansche (6a), die die Außen-Mantelfläche (5a) der Trommel (5) in axialer Richtung (aR) zu beiden Seiten hin begrenzen, um die Position und die Bewegung des aufgewickelten Materialstreifens (M) sowie des Laufstreifen-Rohlings (2R) in axialer Richtung (aR) zu begrenzen.

14. Anlage (1) nach einem der Ansprüche 11 bis 13,
**dadurch gekennzeichnet, dass**
die Trommel (5) mit dem darauf befindlichen Laufstreifen-Rohling (2R) koaxial zu den Profil-Segmenten (9) in der Heizpresse (4) positioniert und gehalten werden kann.
